# EUROPEAN PATENT SPECIFICATION

(11) **EP 3 640 058 B1**
(45) Date of publication and mention of the grant of the patent: **23.02.2022**
(21) Application number: 18818068.1
(22) Date of filing: 01.06.2018
(51) Int. Cl.: B60C 11/12, B60C 11/03

(54) **TIRE**
REIFEN
PNEUMATIQUE

(30) Priority: 16.06.2017 JP 2017118591
(43) Date of publication of application: 22.04.2020
(73) Proprietor: Bridgestone Corporation, Tokyo 104-8340 (JP)
(72) Inventor: HOSODA Toshio, Tokyo 104-8340 (JP); KOBAYASHI Fumitaka, Tokyo 104-8340 (JP)
(74) Representative: Oxley, Robin John George
(86) International application number: PCT/JP2018/021131
(87) International publication number: WO 2018/230363

(56) References cited:
- WO-A1-2010/000797
- WO-A1-2010/063753
- WO-A1-2017/059247
- WO-A1-2017/059247
- DE-A1-102010 016 508
- JP-A- 2004 513 014
- JP-A- 2004 513 014
- JP-A- 2011 509 213
- JP-B2- 4 278 770
- US-A1- 2009 218 020

## Description

### [Technical Field]

The present invention relates to a tire having a sipe formed in a tread that contacts a road surface.

### [Background Art]

In a pneumatic tire (hereinafter, referred to as a tire), both of draining performance and ground contact performance are important in order to show high driving stability on a wet road. In order to obtain both of the draining performance and the ground contact performance, a method that forms a sipe in a block forming a tread is widely adopted.

In particular, a sipe formed in not a simple plane shape but a bent shape, specifically a zigzag shape, whose shape varies in at least one of a tire radial direction and a tire width direction is known (for example, Patent Literature 1).

According to such a sipe, a volume of the groove in the block is increased, and thereby a so-called water storing effect that stores rain water can be obtained. Further, since walls facing each other of the zigzag sipe are engaged with each other, deformation (falling) of the block can be suppressed.

In order to further improve the draining performance in such a zigzag sipe, a tire having a gap portion, which is extended in a tire circumferential direction, formed in a bottom part of the sipe is known (for example, Patent Literature 2). Specifically, Patent Literature 2 discloses a shape of the sipe (slit) in which the bottom part thereof is communicated with a cylindrical gap portion (channel). Reference is also made to US 2009/218020.

### [Citation List]

### [Patent Literature]

[PTL 1] Japanese Unexamined Patent Application Publication No. 2016-002818
[PTL 2] Japanese Unexamined Patent Application Publication No. 2015-504801

### [Summary of Invention]

The engagement of the walls of the sipe described above is caused by the swelling deformation of the wall of the sipe, when the tread (block) contacts the road surface to be compressed. A degree of the swelling deformation is different depending on parts of the sipe. Thus, the shape of the sipe is designed such that the engagement is generated effectively in a whole of the sipe.

With this, rigidity of the block is secured and the ground contact performance of the block is improved. On the other hand, when the block contacts the road surface, the walls facing each other contact each other, and thereby the volume of the groove forming the sipe is substantially decreased. Thus, the draining performance might be deteriorated.

Further, in a case in which a large gap portion is formed in the bottom part of the sipe as disclosed in Patent Literature 2, when the block contacts the road surface, the block is largely deformed toward an inner side in the tire radial direction. Thus, the ground contact performance of the block might be deteriorated.

Accordingly, an object of the present invention is, in consideration of the problem described above, to provide a tire having a sipe formed in a block, the tire being capable of further improving driving stability on a wet road.

One aspect of the present invention is a tire (pneumatic tire 10) a block (block 40, 60) forming a tread (tread 15) that contacts a road surface, and a sipe (for example, sipe 100) formed in the block and extended in a predetermined direction (tire width direction) in a tread surface view. The sipe includes a first inclined portion (first inclined portion 110) inclined against a tire radial direction, a second inclined portion (second inclined portion 120) formed at an outer side in the tire radial direction with respect to the first inclined portion and inclined in a direction opposite to the first inclined portion with respect to the tire radial direction, a bent portion (bent portion 130) communicated with the first inclined portion and the second inclined portion and bent to be protruded toward a direction in which a gap between the first inclined portion and the second inclined portion becomes narrow, and a widened portion (widened portion 160) formed at an inner side in the tire radial direction with respect to the first inclined portion and widened in a groove width more than the first inclined portion. The widened portion is communicated with the first inclined portion and formed at a side of the bent portion with respect to an extension line of the first inclined portion. A size of the widened portion (160) along a protrusion direction toward which the bent portion (130) is protruded is changed in the predetermined direction and is the largest in a center region of the sipe in the predetermined direction.

### [Brief Description of Drawings]

[Fig. 1] Fig. 1 is a plane developed view illustrating a part of a tread of a pneumatic tire 10.
[Fig. 2] Fig. 2 is an enlarged plane view illustrating a part of the tread 15 of the pneumatic tire 10.
[Fig. 3A] Fig. 3A is a cross-sectional view illustrating a block 40 taken along line F3A-F3A in Fig. 2.
[Fig. 3B] Fig. 3B is a cross-sectional view illustrating the block 40 taken along line F3B-F3B in Fig. 2.
[Fig. 4] Fig. 4 is an enlarged cross-sectional view illustrating a sipe 100 formed in the block 40.
[Fig. 5A] Fig. 5A is a cross-sectional view illustrating a modified example of the sipe 100.
[Fig. 5B] Fig. 5B is a cross-sectional view illustrating a modified example of the sipe 100.
[Fig. 5C] Fig. 5C is a cross-sectional view illustrating a modified example of the sipe 100.
[Fig. 6] Fig. 6 is a cross-sectional view illustrating a modified example of the block 40.

### [Description of Embodiments]

Hereinafter, embodiments of the present invention will be described with reference to the drawings. The same reference signs or similar reference signs are assigned to the same functions or the same components and the description thereof is omitted as needed.

### (1) Schematic whole configuration of tire

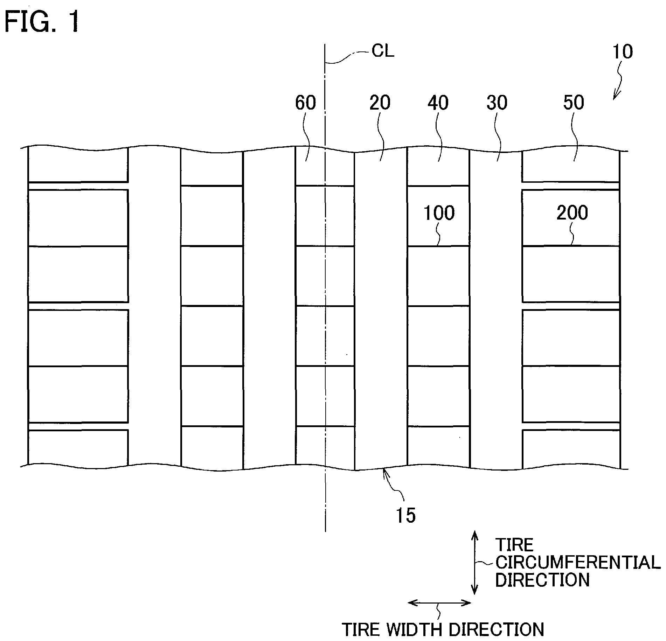

Fig. 1 is a plane developed view illustrating a part of a tread of a pneumatic tire 10. As shown in Fig. 1, the pneumatic tire 10 is provided with a tread 15 that contacts a road surface. The pneumatic tire 10 includes a tread pattern symmetry in a tire width direction with respect to a tire equatorial line CL.

A plurality of circumferential direction grooves extended in a tire circumferential direction, specifically a circumferential direction groove 20 and a circumferential direction groove 30, are formed in the tread 15. A block 40 extended in the tire circumferential direction is formed between the circumferential direction groove 20 and the circumferential direction groove 30. Further, a block 50 is formed at an outer side in the tire width direction with respect to the circumferential direction groove 30. Further, a block 60 is formed at a position including the tire equatorial line CL. In this way, the blocks 40, 50 and 60 substantially form the tread 15.

The block 40 is offset from the tire equatorial line CL and formed at an inner side in the tire width direction. While, the block 50 is formed in a region at the outer side in the tire width direction of the tread 15, specifically the block 50 is formed in a tread shoulder.

In the present embodiment, the pneumatic tire 10 is used for a four-wheel vehicle such as a passenger car. The pneumatic tire 10 is provided with a carcass ply that forms a frame of the pneumatic tire 10, a pair of bead portions mounted to a rim wheel, a belt layer formed at an outer side in a tire radial direction with respect to the carcass ply, and the like (these components are not illustrated).

The pneumatic tire 10 generally adopts a radial structure, however the structure of the pneumatic tire 10 is not limited to a radial structure, namely a bias structure may be adopted. Further, a shape of the tread 15 shown in Fig. 1 (tread pattern) shows merely one example, and therefore the shape of each of the block and the groove (circumferential groove or width direction groove) and the number of each of the blocks and the grooves are not especially limited.

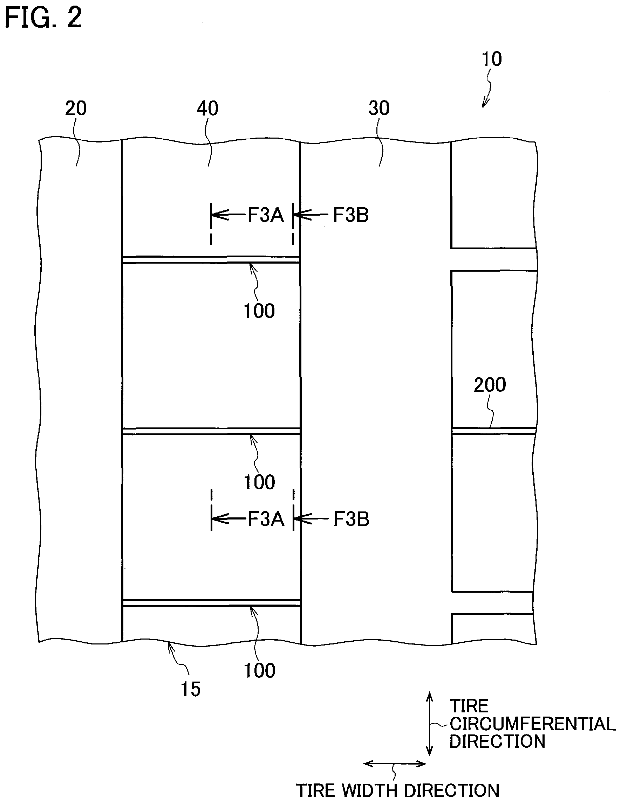

Fig. 2 is an enlarged plane view illustrating a part of the tread 15 of the pneumatic tire 10 shown in Fig. 1. As shown in Fig. 1 and Fig. 2, a plurality of sipes 100 is formed in the block 40. Similarly, the sipes 100 are formed in the block 60 (see Fig. 1).

The sipe 100 is extended in a predetermined direction in a tread surface view. In the present embodiment, the sipe 100 is extended substantially parallel to the tire width direction. The sipe 100 is formed linearly in the tread surface view so as to cross the block 40 (block 60). That is, end portions in the tire width direction of the sipe 100 are communicated with the circumferential direction grooves 20 and 30.

Further, a plurality of sipes 200 is formed in the block 50 formed in the tread shoulder. In the present embodiment, the sipe 200 is also extended substantially parallel to the tire width direction. The sipe 200 is formed linearly in the tread surface view. An end portion at the inner side in the tire width direction of the sipe 200 is communicated with the circumferential direction groove 30. While, an end portion at the outer side in the tire width direction of the sipe 200 is opened to a shoulder end of the tread 15.

The sipe 200 is formed in a simple plane shape, while the sipe 100 is formed in a zigzag shape along the tire radial direction to be repeatedly fluctuated with a predetermined amount in the tire circumferential direction as described below.

### (2) Shape of sipe

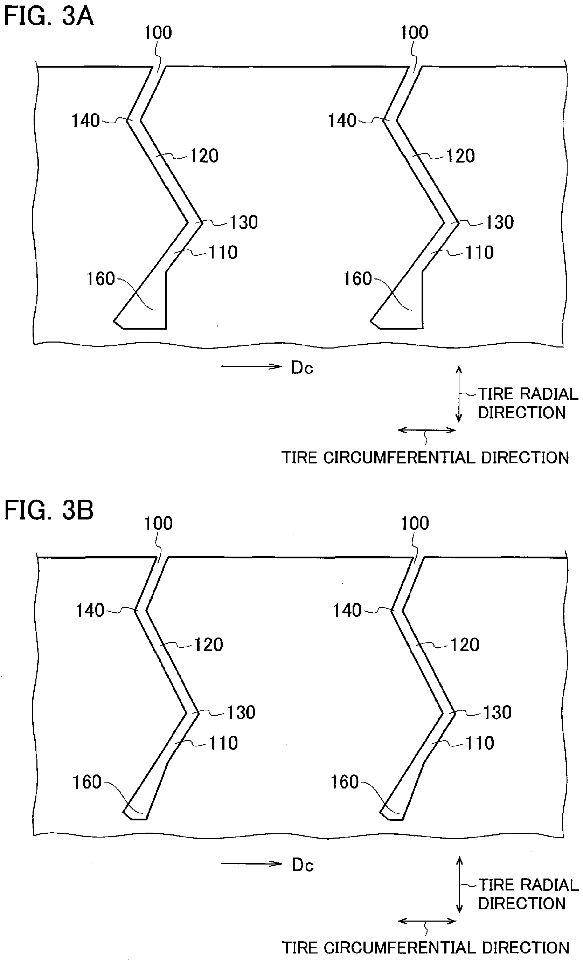

Fig. 3A is a cross-sectional view illustrating the block 40 taken along line F3A-F3A in Fig. 2. Fig. 3B is a cross-sectional view illustrating the block 40 taken along line F3B-F3B in Fig. 2.

Fig. 3A shows a shape of the sipe 100 at a center side in the tire width direction of the block 40. While, Fig. 3B shows a shape of the sipe 100 at a side of the end portion in the tire width direction of the block 40. As described below, shapes (sizes) of widened portions 160 are different from each other in the Fig. 3A and Fig. 3B.

As shown in Fig. 3A and Fig. 3B, the sipe 100 includes a first inclined portion 110, a second inclined portion 120, a bent portion 130, a bent portion 140, and a widened portion 160.

Each of the first inclined portion 110 and the second inclined portion 120 is formed linearly. The second inclined portion 120 is formed at the outer side in the tire radial direction with respect to the first inclined portion 110. Each of the first inclined portion 110 and the second inclined portion 120 is not parallel to the tire radial direction but inclined against the tire radial direction.

However, the second inclined portion 120 inclined to a direction opposite to the first inclined portion 110 with respect to the tire radial direction. A portion of the sipe 110 at the outer side in the tire radial direction with respect to the bent portion 140, specifically a portion of the sipe 100 formed adjacent to a tread of the block 40, is inclined in a direction same as the first inclined portion 110.

The bent portion 130 is formed at the inner side in the tire radial direction. The bent portion 140 is formed at the outer side in the tire radial direction with respect to the bent portion 130. That is, the sipe 100 includes a plurality of the bent portions in a depth direction of the sipe 100 (tire radial direction).

An offset amount of each of the bent portion 130 and the bent portion 140 is small, however the offset amount is the largest in the center region of the sipe 100 in the tire width direction (compare Fig. 3A and Fig. 3).

The bent portion 130 is communicated with the first inclined portion 110 and the second inclined portion 120. The bent portion 130 is bent to be protruded toward a direction in which a gap between the first inclined portion 110 and the second inclined portion 120 becomes narrow. Specifically, as shown in Fig. 3A and Fig. 3B, the bent portion 130 is bent to be protruded toward one side in the tire circumferential direction (toward a protrusion direction Dc in the figures).

The sipe having such two bent portions may be called an M-shape sipe as its shape is similar to that of M.

The widened portion 160 is widened in a groove width (sipe width) more than other part of the sipe 100. The widened portion 160 is formed at the inner side in the tire radial direction with respect to the first inclined portion 110. Specifically, the widened portion 160 is formed in a bottom portion of the sipe 100, namely a deepest portion in the depth direction.

Further, as shown in Fig. 3A and Fig. 3B, the widened portion 160 is communicated with the first inclined portion 110 and is widened in the groove width more than the first inclined portion 110.

The widened portion 160 is formed at a side of the bent portion 130 with respect to an extension line of the first inclined portion 110. Specifically, the widened portion 160 is formed at a side of the protrusion direction Dc toward which the bent portion 130 is protruded. That is, the widened portion 160 is widened from a boundary with the first inclined portion 110 (it may be called a widening start point) toward the side of the bent portion 130 (the side of the protrusion direction Dc).

On the other hand, the widened portion 160 is not widened toward an opposite side with respect to the extension line of the first inclined portion 110. That is, the widened portion 160 is not widened at the opposite side in the protrusion direction Dc toward which the bent portion 130 is protruded and is merely extended along an extending direction of the first inclined portion 110.

The sipe having such a widened portion formed in the deepest portion in the depth direction may be also called a flask-shape sipe as its shape is similar to that of a flask.

The widened portion 160 is formed in a region between the deepest portion in the depth direction of the sipe 100 and the bent portion 130 formed at an innermost side in the tire radial direction.

A size (dimension) of the widened portion 160 is changed in the tire width direction (a predetermined direction). Specifically, as shown in Fig. 3A and Fig. 3B, the size of the widened portion 160 along the protrusion direction Dc toward which the bent portion 130 is protruded is changed in the tire width direction and is the largest in the center region of the sipe 100 in the tire width direction.

Considering improvement of the draining performance described below, a width where the size of the widened portion 160 is the largest is preferably set to 50% or less of a width of the sipe 100 in the tire width direction (the width of the sipe 100 is similar to a width of the block 40 in the present embodiment).

In the present embodiment, the widened portion 160 is formed in a substantially triangular shape in a side view of the sipe 100. That is, the width of the widened portion 160 becomes wider toward the inner side in the tire radial direction.

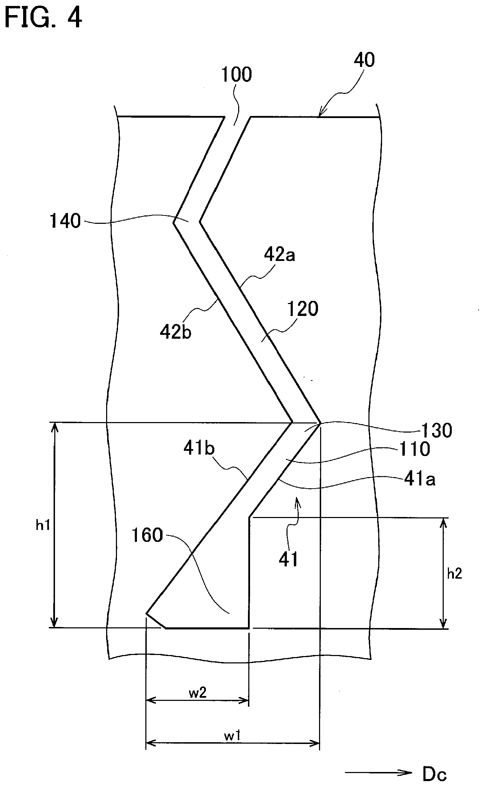

Fig. 4 is an enlarged cross-sectional view illustrating the sipe 100 formed in the block 40. As shown in Fig. 4, the first inclined portion 110 of the sipe 100 is substantially formed by walls, which face each other, of the block 40. Specifically, the first inclined portion 110 is formed by a wall 41a and a wall 41b of the block 40. The wall 41a is located at the inner side in the tire radial direction. The wall 41b is located at the outer side in the tire radial direction with respect to the wall 41a. Further, the wall 41a is located at the side of the protrusion direction Dc and the wall 41b is located at the opposite side in the protrusion direction Dc.

Similarly, the second inclined portion 120 of the sipe 100 is substantially formed by walls, which face each other, of the block 40. Specifically, the second inclined portion 120 is formed by a wall 42a and a wall 42b of the block 40. The wall 42b is located at the inner side in the tire radial direction. The wall 42a is located at the outer side in the tire radial direction with respect to the wall 42b. Further, the wall 42a is located at the side of the protrusion direction Dc and the wall 42b is located at the opposite side in the protrusion direction Dc.

The block 40 includes a wall forming portion 41 that forms the wall 41a at the inner side in the tire radial direction of the first inclined portion 110. That is, the wall forming portion 41 is a part of the block 40 and is adjacent to the widened portion 160.

The wall forming portion 41 contacts the wall 41b at the outer side in the tire radial direction of the first inclined portion 110, in a predetermined region, when a load is applied. Specifically, the wall forming portion 41 contacts the wall 41b in a portion where the wall 41a is formed, namely a portion from the bent portion 130 to the boundary (widening start point) between the first inclined portion 110 and the widened portion 160.

The wall 42b that forms the first inclined portion 110 is extended along the extending direction (inclined direction) of the first inclined portion 110, to the widened portion 160. That is, the wall 42b is formed linearly so as to form a wall surface of the widened portion 160 at the opposite side in the protrusion direction Dc, along the extending direction of the first inclined portion 110.

In the present embodiment, a ratio h2 / h1 of a height h1 along the tire radial direction, from the end portion of the sipe 100 at the inner side in the tire radial direction to the bent portion 130 and a height h2 along the tire radial direction, from the end portion of the sipe 100 at the inner side in the tire radial direction to an end portion of the widened portion 160 at the outer side in the tire radial direction is set in a range between 0.5 and 0.8. The ratio h2 / h1 is preferably set in a range between 0.7 and 0.8.

Further, a ratio w2 / w1 of a width w1 along the protrusion direction Dc toward which the bent portion 130 is protruded, from the end portion of the sipe 100 at the inner side in the tire radial direction to the bent portion 130 and a width w2 along the protrusion direction Dc, of the end portion of the widened portion 160 at the inner side in the tire radial direction is set in a range between 0.5 and 0.8.

Further, each of inclined angles (sharp angle) of the first inclined portion 110 and the second inclined portion 120 against the tire radial direction is preferably set in a range between 35 degrees and 50 degrees. Further, each of the widths of the first inclined portion 110 and the second inclined portion 120 is preferably set in a range between 0.1 mm and 0.4 mm.

### (3) Functions and effects

Next, functions and effects of the pneumatic tire 10 described above will be described. According to the observation of the behavior of the walls (walls 41a, 41b, 42a and 42b) that form the sipe 100, the walls do not contact each other because the swelling deformation of the wall in the bottom portion of the sipe 100 is small even when the load is applied.

That is, the improvement of the rigidity of the block 40 due to the engagement of the walls of the sipe 100 is mainly obtained in a region of the sipe 100 from the center thereof to a side of the ground contact surface in the tire radial direction. Thus, the draining performance can be improved while maintaining the rigidity of the block 40 by forming a gap (widened portion) in which the facing walls do not contact each other, in the bottom portion of the sipe 100. This is because the gap has sufficient volume (capacity) to store rain water.

In the present embodiment described above, the gap (widened portion) is formed in the region between the bottom portion of the sipe 100, namely the end portion at the inner side in the tire radial direction of the sipe 100, and the bent portion 130 closest to the end portion of the sipe 100. Further, the size (dimension) of the widened portion 160 is the largest in the center region of the sipe 100 in the tire width direction.

Further, the size of the widened portion 160 in the protrusion direction Dc is changed in accordance with the offset amount of the bent portions 130 and 140 (in particular, bent portion 130), in the side view of the sipe 100.

More specifically, as the offset amount of the bent portion is large, the size of the widened portion 160 is set to be large, and as the offset amount of the bent portion is small, the size of the widened portion 160 is set to be small.

Consequently, the rain water can be stored effectively in the widened portion 160 in the center region, which is the farthest from the circumferential direction grooves 20 and 30, of the sipe 100 in the tire width direction. Further, when the degree of the engagement of the walls of the sipe 100 becomes large due to the load applied to the block 40, the rain water stored in the widened portion 160 is facilitated to be drained to the circumferential direction grooves 20 and 30 at a high flow speed.

On the other hand, in a case in which the widened portion 160 of the sipe 100 is set to be too large against the offset amount of the bent portion, large resistance is generated when a blade that forms the sipe 100 is pulled off in vulcanizing the pneumatic tire 10. Accordingly, such a configuration is not favorable.

Table 1 and Table 2 show a result of an evaluation test.

**Table 1**

| | Conventional example | Comparative example 1 | Example 1 | Example 2 | Example 3 | Comparative example 2 |
|---|---|---|---|---|---|---|
| Sipe widened portion | Not included | Included | Included | Included | Included | Included |
| h2 / h1 (%) | - | 25 | 50 | 75 | 100 | 125 |
| w2 / w1 (%) | - | 75 | 75 | 75 | 75 | 75 |
| Wet road driving stability | 4 | 5 | 6 | 7 | 8 | 5 |

**Table 2**

| | Conventional example | Comparative example 3 | Example 4 | Example 5 | Example 6 | Comparative example 4 |
|---|---|---|---|---|---|---|
| Sipe widened portion | Not included | Included | Included | Included | Included | Included |
| h2 / h1 (%) | - | 75 | 75 | 75 | 75 | 75 |
| w2 / w1 (%) | - | 25 | 50 | 75 | 100 | 125 |
| Wet road driving stability | 4 | 5 | 6 | 7 | 8 | 5 |

"Sipe widened portion" shown in Table 1 and Table 2 denotes whether the widened portion 160 described above is included. The ratio h2 / h1 and the ratio w2 / w1 are shown in Fig. 4.

A test condition and a test method of the evaluation test are as described below.

Test tire size: 245/45R17
Evaluation method: sensory evaluation for the driving stability by a test driver when the driver drives a vehicle with the test tire on a wet test course.
Evaluation result: score out of 10 (higher score is superior in the driving stability)

As shown in Table 1 and Table 2, in configurations in which the sipe including the sipe widened portion (the widened portion 160) is formed and each of the ratio h2 / h1 and the ratio w2 / w1 is set in a certain range (see Examples 1 to 6), the wet road driving stability is largely improved. It is preferable that the sipe widened portion (gap) is set to be large from a viewpoint of the draining performance, however in a case in which the sipe widened portion exceeds the height h1 or the width w1, the rigidity of the block is not sufficiently secured.

This is because, in a case in which the sipe widened portion is too large, the walls of the sipe, which should engaged with each other, are not engaged with each other, and thereby the deformation (falling) of the block is caused. Further, this is because the local deformation of the block in the bottom portion of the sipe 100 becomes large and thereby the deformation of the block is caused. As a result, the ground contact performance of the block is deteriorated, and thereby the driving stability on a wet road is especially deteriorated.

In this way, according to the pneumatic tire 10, the widened portion 160 formed in the sipe 100 is communicated with the first inclined portion 110 and is formed at the side of the bent portion 130 (protrusion direction Dc) with respect to the extension line of the first inclined portion 110.

Accordingly, the rain water is sufficiently stored by the widened portion 160 with the groove width widened, and the rain water is drained through the circumferential direction grooves 20 and 30. With this, the draining performance is improved.

Further, the widened portion 160 is formed only at the side of the bent portion 130, and therefore the falling deformation of the block 40 (block 60, hereinafter the same) is hardly caused. Specifically, since the widened portion 160 is formed only at the side of the bent portion 130 as described above, the local deformation of the block 40 in the bottom portion of the sipe 100 is suppressed.

Further, the wall forming portion 41 adjacent to the widened portion contacts the wall 41b at the outer side in the tire radial direction of the first inclined portion 111, in the predetermined region, namely a portion from the bent portion 130 to the boundary (widening start point) between the first inclined portion 110 and the widened portion 160, when a load is applied.

Accordingly, the engagement between the wall 41a and the wall 41b is caused although the widened portion 160 is formed, and thereby the deformation of the block 40 is suppressed. With this, the rigidity of the block 40 is maintained so as not to deteriorate the driving stability.

That is, according to the pneumatic tire 10, the driving stability on the wet road can be further improved, although the bent sipe 100 is formed in the block 40.

In the present embodiment, regarding the size of the widened portion 160, the ratio h2 / h1 is set in a range between 0.5 and 0.8 and the ratio w2 / w1 is set in a range between 0.5 and 0.8 (see Fig. 4). According to the widened portion 160 with such a size, both of the draining performance and securing of the rigidity of the block are obtained at a high level, and therefore the driving stability on the wet road can be further improved.

In the present embodiment, one end portion in an extending direction (tire width direction) of the sipe 100 is communicated with the circumferential direction groove 20 and another end portion in the extending direction of the sipe 100 is communicated with the circumferential direction groove 30.

Accordingly, the rain water stored in the widened portion 160 of the sipe 100 is efficiently drained to the outside of the block 40. With this, the draining performance can be further improved.

In the present embodiment, the size of the widened portion 160 is changed in the tire width direction (a predetermined direction) and is the largest in the center region of the sipe 100 in the tire width direction.

Accordingly, the rain water is effectively stored in the widened portion 160 in the center region of the sipe 100 in the tire width direction as described above. Thus, when the degree of the engagement of the walls of the sipe 100 becomes large, a pump function is caused and thereby the rain water stored in the widened portion 160 is facilitated to be drained to the circumferential direction grooves 20 and 30 at a high flow speed. With this the draining performance can be further improved.

In the present embodiment, the sipe 200 formed in the block 50 formed in the tread shoulder does not include a widened portion like the widened portion 160 formed in the sipe 100 and further the sipe 200 is formed in a plane shape. When the vehicle is turning, large lateral force is applied to the block 50 formed in the tread shoulder. In this respect, according to the pneumatic tire 10, since the sipe 200 with a simple plane shape is formed in the block 50, the damage of the block 50 is suppressed and the driving stability on the wet road is improved.

### (4) Other embodiments

As described above, the contents of the present invention are described with reference to the examples, however the present invention is not limited to those descriptions. It is obvious for a person skilled in the art to adopt various modifications and improvements without departing from the scope of the appended claims.

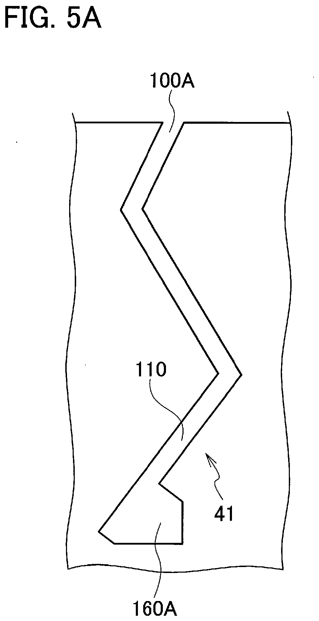

For example, the shape of the sipe 100 may be modified as below. Fig. 5A to Fig. 5C show modified examples of the sipe 100. A sipe 100A, a sipe 100B and a sipe 100C shown in Fig. 5A to Fig. 5C are different in the shape of the widened portion from the sipe 100.

Specifically, the widened portion 160 of the sipe 100 is formed in a triangular shape in the side view of the sipe 100, while when a widened portion 160A of the sipe 100A is compared to the widened portion 160, a wall forming portion 41 is long and a region where walls of the sipe 100A engage with each other is increased as shown in Fig. 5A. Consequently, the rigidity of the block is further increased.

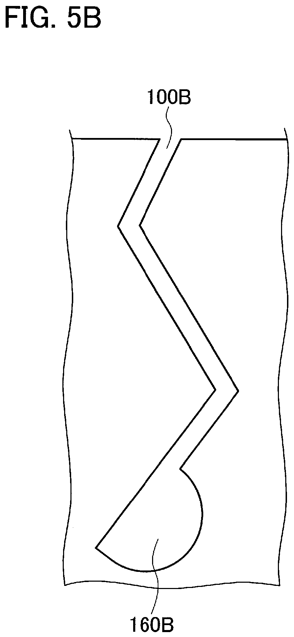

As shown in Fig. 5B, a widened portion 160B of the sipe 100B is formed in a semicircular shape. According to the sipe 100B, since the widened portion 160B is formed in a semicircular shape, resistance when a blade for forming the sipe 100B is pulled off in vulcanizing the tire is hardly generated.

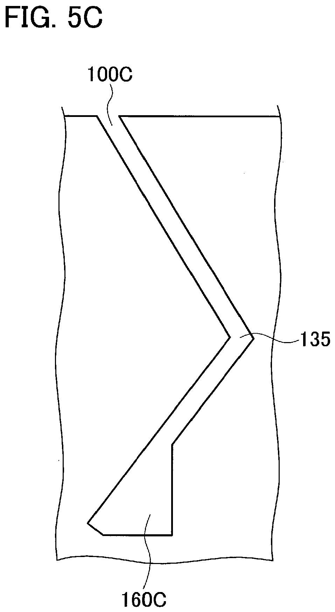

As shown in Fig. 5C, a widened portion 160C of the sipe 100C has the same shape as the widened portion 160 of the sipe 100. While, the sipe 100C has only one bent portion 135. The bent portion 135 is formed at a substantially center in the tire radial direction of the sipe 100C.

Further, the shape of the sipes formed in the block 40 described above may be modified as below.

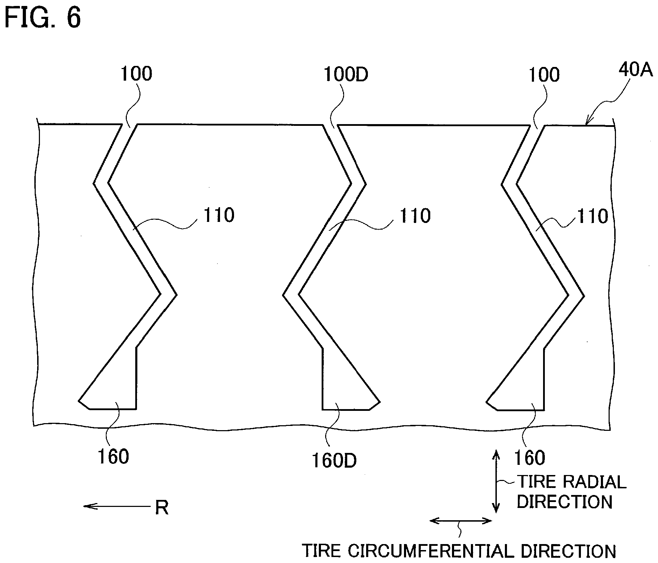

Fig. 6 shows a modified example of the block 40. Specifically, Fig. 6 is a cross-sectional view illustrating a block 40A along the tire circumferential direction and the tire radial direction, corresponding to Fig. 3A.

As shown in Fig. 6, the sipe 100 and a sipe 100D are formed alternately in the tire circumferential direction in the block 40A.

The sipe 100D includes a widened portion 160D having the same shape as the widened portion 160. The widened portion 160D (first sipe) is widened toward a rotation direction R of the tire with respect to the extension line of the first inclined portion 110.

The widened portion 160 (second sipe) is widened toward a direction opposite to the rotation direction R of the tire with respect to the extension line of the inclined portion 110.

In this way, the sipe 100 and the sipe 100D are symmetry in a section along the tire circumferential direction and the tire radial direction. That is, the inversed shape of the sipe 100 is the shape of the sipe 100D.

According to the block 40A, the sipe 100 and the sipe 100D are formed alternately in the tire circumferential direction, namely the rotation direction of the tire. Since the direction of the widened portion in the sipe 100 and the direction of the widened portion in the sipe 100D are different from each other, robustness in both of accelerating and braking of the vehicle can be improved, and thereby the superior driving stability can be obtained in both of accelerating and braking.

Further, in the embodiments described above, the widened portion 160 is formed in the bottom portion of the sipe 100, however the widened portion 160 may not be formed in the bottom portion of the sipe 100. For example, a sipe having a short width similar to the width of the first inclined portion 110 may be formed at the inner side in the tire radial direction with respect to the widened portion 160, namely at a position deeper in the depth direction of the sipe 100 than the widened portion 160.

In the embodiments described above, the sipe 100 is extended in the tire width direction, however the extending direction of the sipe 100 is not especially limited. That is, the extending direction of the sipe 100 may be inclined against the tire width direction or may be parallel to the tire circumferential direction.

Further, the sipe 100 may be communicated with at least one of the circumferential direction groove 20 and the circumferential direction groove 30. Or alternatively, the sipe 100 may not be communicated with the circumferential direction groove 20 and the circumferential direction groove 30.

Further, the sipe 100 may not be formed linearly in the tread surface view. For example, the sipe 100 may be formed so as to slightly curve or meander. Similarly, each of the first inclined portion 110 and the second inclined portion 120 may not be formed linearly.

### [Industrial Applicability]

The tire described above is useful to further improve the driving stability on the wet road, although the tire has the bent sipe in the block.

### [Reference Signs List]

- 10:: pneumatic tire
- 15:: tread
- 20:: circumferential direction groove
- 30:: circumferential direction groove
- 40, 50, 60:: block
- 40A:: block
- 41a, 41b, 42a, 42b:: wall
- 41:: wall forming portion
- 100, 100A to 100D:: sipe
- 110:: first inclined portion
- 120:: second inclined portion
- 130, 135, 140:: bent portion
- 160, 160A to 160D:: widened portion
- 200:: sipe

## Claims

1. A tire (10) comprising:
a block (40, 60) forming a tread (15) that contacts a road surface; and
a sipe (100) formed in the block and extended in a predetermined direction in a tread surface view,
wherein the sipe comprises: a first inclined portion (110) inclined against a tire radial direction;
a second inclined portion (120) formed at an outer side in the tire radial direction with respect to the first inclined portion and inclined in a direction opposite to the first inclined portion (110) with respect to the tire radial direction;
a bent portion (130) communicated with the first inclined portion (110) and the second inclined portion (120) and bent to be protruded toward a direction in which a gap between the first inclined portion (110) and the second inclined portion (120) becomes narrow; and
a widened portion (160) formed at an inner side in the tire radial direction with respect to the first inclined portion (110) and widened in a groove width more than the first inclined portion (110), and
wherein the widened portion (160) is communicated with the first inclined portion (110) and formed at a side of the bent portion (130) with respect to an extension line of the first inclined portion (110), **characterized in that**
a size of the widened portion (160) along a protrusion direction toward which the bent portion (130) is protruded is changed in the predetermined direction and is the largest in a center region of the sipe in the predetermined direction.

2. The tire according to claim 1, wherein the block (40) comprises a wall forming portion (41) that forms a wall at the inner side in the tire radial direction of the first inclined portion (110), and
wherein the wall forming portion (41) is adjacent to the widened portion (160) to contact a wall (41b) at the outer side in the tire radial direction of the first inclined portion (110), in a predetermined region, when a load is applied.

3. The tire according to claim 1 or 2, wherein a ratio h2 / h1 of a height h1 along the tire radial direction, from an end portion of the sipe (100) at the inner side in the tire radial direction to the bent portion (130) and a height h2 of the sipe along the tire radial direction, from the end portion of the sipe (100) at the inner side in the tire radial direction to an end portion of the widened portion (160) at the outer side in the tire radial direction is set in a range between 0.5 and 0.8.

4. The tire according to any one of claims 1 to 3, wherein a ratio w2 / w1 of a width w1 along a protrusion direction toward which the bent portion (130) is protruded, from the end portion of the sipe (100) at the inner side in the tire radial direction to the bent portion (130) and a width w2 along the protrusion direction, of the end portion of the widened portion (160) at the inner side in the tire radial direction is set in a range between 0.5 and 0.8.

5. The tire according to any one of claims 1 to 4, further comprising a circumferential direction groove (20, 30) extended in a tire circumferential direction,
wherein at least one end portion of the sipe (100) in an extending direction of the sipe (100) is communicated with the circumferential direction groove (20, 30).

6. The tire according to any one of claims 1 to 5, wherein the sipe (100) comprises a first sipe (100D) in which the widened portion (160D) is widened toward a rotation direction of the tire (10) with respect to the extension line of the first inclined portion (110), and a second sipe (100) in which the widened portion (160) is widened toward a direction opposite to the rotation direction of the tire with respect to the extension line of the first inclined portion (110), and
wherein the first sipe (100D) and the second sipe (100) are formed alternately in a tire circumferential direction.

## Patentansprüche

1. Reifen (10), der Folgendes umfasst:
einen Block (40, 60), der eine Lauffläche (15) bildet, die eine Straßenoberfläche berührt, und
eine Lamelle (100), die in dem Block gebildet ist und sich in einer Laufflächendraufsicht in einer vorbestimmten Richtung erstreckt,
wobei die Lamelle Folgendes umfasst: einen ersten geneigten Abschnitt (110), der in Bezug auf eine Reifenradialrichtung geneigt ist,
einen zweiten geneigten Abschnitt (120), der an einer in der Reifenradialrichtung äußeren Seite in Bezug auf den ersten geneigten Abschnitt gebildet und in einer Richtung, entgegengesetzt zu dem ersten geneigten Abschnitt (110), in Bezug auf die Reifenradialrichtung geneigt ist,
einen gebogenen Abschnitt (130), der mit dem ersten geneigten Abschnitt (110) und dem zweiten geneigten Abschnitt (120) verbunden und so gebogen ist, dass er zu einer Richtung hin vorspringt, in der ein Spalt zwischen dem ersten geneigten Abschnitt (110) und dem zweiten geneigten Abschnitt (120) schmal wird, und
einen verbreiterten Abschnitt (160), der an einer in der Reifenradialrichtung inneren Seite in Bezug auf den ersten geneigten Abschnitt (110) gebildet und in einer Rillenbreite mehr als der erste geneigte Abschnitt (110) verbreitert ist, und
wobei der verbreiterte Abschnitt (160) mit dem ersten geneigten Abschnitt (110) verbunden und an einer Seite des gebogenen Abschnitts (130) in Bezug auf eine Erstreckungslinie des ersten geneigten Abschnitts (110) gebildet ist, **dadurch gekennzeichnet, dass**
eine Größe des verbreiterten Abschnitts (160) entlang einer Vorsprungsrichtung, zu der hin der gebogene Abschnitt (130) vorspringt, in der vorbestimmten Richtung geändert wird und in einem in der vorbestimmten Richtung mittleren Bereich der Lamelle am größten ist.

2. Reifen nach Anspruch 1, wobei der Block (40) einen Wandbildungsabschnitt (41) umfasst, der eine Wand an der in der Reifenradialrichtung inneren Seite des ersten geneigten Abschnitts (110) bildet, und
wobei der Wandbildungsabschnitt (41) zu dem verbreiterten Abschnitt (160) benachbart ist, um eine Wand (41b) an der in der Reifenradialrichtung äußeren Seite des ersten geneigten Abschnitts (110), in einem vorbestimmten Bereich, zu berühren, wenn eine Last angewendet wird.

3. Reifen nach Anspruch 1 oder 2, wobei ein Verhältnis h2/h1 einer Höhe h1 entlang der Reifenradialrichtung, von einem Endabschnitt der Lamelle (100) an der in der Reifenradialrichtung inneren Seite bis zu dem gebogenen Abschnitt (130), und einer Höhe h2 der Lamelle entlang der Reifenradialrichtung, von dem Endabschnitt der Lamelle (100) an der in der Reifenradialrichtung inneren Seite bis zu einem Endabschnitt des verbreiterten Abschnitts (160) an der in der Reifenradialrichtung äußeren Seite, in einem Bereich zwischen 0,5 und 0,8 festgesetzt ist.

4. Reifen nach einem der Ansprüche 1 bis 3, wobei ein Verhältnis w2/w1 einer Breite w1 entlang einer Vorsprungsrichtung, zu der der gebogene Abschnitt (130) hin vorspringt, von dem Endabschnitt der Lamelle (100) an der in der Reifenradialrichtung inneren Seite bis zu dem gebogenen Abschnitt (130), und einer Breite w2 entlang der Vorsprungsrichtung, des Endabschnitts des verbreiterten Abschnitts (160) an der in der Reifenradialrichtung inneren Seite, in einem Bereich zwischen 0,5 und 0,8 festgesetzt ist.

5. Reifen nach einem der Ansprüche 1 bis 4, der ferner eine Umfangsrichtungsrille (20, 30) umfasst, die sich in einer Reifenumfangsrichtung erstreckt,
wobei mindestens ein Endabschnitt der Lamelle (100) in einer Ausdehnungsrichtung der Lamelle (100) mit der Umfangsrichtungsrille (20, 30) verbunden ist.

6. Reifen nach einem der Ansprüche 1 bis 5, wobei die Lamelle (100) eine erste Lamelle (100D), in welcher der verbreiterte Abschnitt (160D) zu einer Drehrichtung des Reifens (10) hin in Bezug auf die Erstreckungslinie des ersten geneigten Abschnitts (110) verbreitert ist, und eine zweite Lamelle (100), in welcher der verbreiterte Abschnitt (160) in einer Richtung, entgegengesetzt zu der Drehrichtung des Reifens, in Bezug auf die Erstreckungslinie des ersten geneigten Abschnitts (110) verbreitert ist, umfasst und
wobei die erste Lamelle (100D) und die zweite Lamelle (100) in einer Reifenumfangsrichtung abwechselnd gebildet sind.

## Revendications

1. Bandage pneumatique (10), comprenant :
un pavé (40, 60) formant une bande de roulement (15) qui contacte la surface d'une route ; et
une lamelle (100) formée dans le pavé et s'étendant dans une direction prédéterminée dans une vue de la surface de la bande de roulement ;
dans lequel la lamelle comprend : une première partie inclinée (110), inclinée par rapport à une direction radiale du bandage pneumatique ;
une deuxième partie inclinée (120) formée au niveau d'un côté externe, dans la direction radiale du bandage pneumatique, par rapport à la première partie inclinée, et inclinée dans une direction opposée à celle de la première partie inclinée (110) par rapport à la direction radiale du bandage pneumatique ;
une partie fléchie (130) mise en communication avec la première partie inclinée (110) et la deuxième partie inclinée (120) et fléchie de sorte à faire saillie vers une direction dans laquelle un espace entre la première partie inclinée (110) et la deuxième partie inclinée (120) est rétréci ; et
une partie élargie (160) formée au niveau d'un côté interne, dans la direction radiale du bandage pneumatique, par rapport à la première partie inclinée (110) et plus élargie dans une largeur de rainure que la première partie inclinée (110) ; et
dans lequel la partie élargie (160) est mise en communication avec la première partie inclinée (110) et formée au niveau d'un côté de la partie fléchie (130) par rapport à une ligne d'extension de la première partie inclinée (110), **caractérisé en ce que** :
une dimension de la partie élargie (160), le long d'une direction de saillie vers laquelle la partie fléchie (130) fait saillie, est changée dans la direction prédéterminée et est maximale dans une région centrale de la lamelle dans la direction prédéterminée.

2. Bandage pneumatique selon la revendication 1, dans lequel le pavé (40) comprend une partie formant une paroi (41) qui forme une paroi au niveau du côté interne, dans la direction radiale du bandage pneumatique, de la première partie inclinée (110) ; et
dans lequel la partie formant une paroi (41) est adjacente à la partie élargie (160) pour contacter une paroi (41b) au niveau du côté externe, dans la direction radiale du bandage pneumatique, de la première partie inclinée (110), dans une région prédéterminée, lors de l'application d'une charge.

3. Bandage pneumatique selon la revendication 1 ou 2, dans lequel un rapport h2/h1 entre une hauteur h1, le long de la direction radiale du bandage pneumatique, d'une partie d'extrémité de la lamelle (100), au niveau du côté interne, dans la direction radiale du bandage pneumatique, vers la partie fléchie (130), et une hauteur h2 de la lamelle, le long de la direction radiale du bandage pneumatique, de la partie d'extrémité de la lamelle (100), au niveau du côté interne, dans la direction radiale du bandage pneumatique, vers une partie d'extrémité de la partie élargie (160) au niveau du côté externe, dans la direction radiale du bandage pneumatique, est fixé dans une plage allant de 0,5 à 0,8.

4. Bandage pneumatique selon l'une quelconque des revendications 1 à 3, dans lequel un rapport w2/w1 entre une largeur w1, le long de la direction de saillie vers laquelle la partie fléchie (130) fait saillie, de la partie d'extrémité de la lamelle (100), au niveau du côté interne, dans la direction radiale du bandage pneumatique, vers la partie fléchie (130), et une largeur w2, le long de la direction de saillie, de la partie d'extrémité de la partie élargie (160), au niveau du côté interne, dans la direction radiale du bandage pneumatique, est fixé dans une plage allant de 0,5 à 0,8.

5. Bandage pneumatique selon l'une quelconque des revendications 1 à 4, comprenant en outre une rainure dans la direction circonférentielle (20, 30) s'étendant dans une direction circonférentielle du bandage pneumatique ;
dans lequel au moins une partie d'extrémité de la lamelle (100), dans une direction d'extension de la lamelle (100), est mise en communication avec la rainure dans la direction circonférentielle (20,30).

6. Bandage pneumatique selon l'une quelconque des revendications 1 à 5, dans lequel la lamelle (100) comprend une première lamelle (100D) dans laquelle la partie élargie (160D) est élargie vers une direction de rotation du bandage pneumatique (10) par rapport à la ligne d'extension de la première partie inclinée (110), et une deuxième lamelle (100), dans laquelle la partie élargie (160) est élargie vers une direction opposée à la direction de rotation du bandage pneumatique par rapport à la ligne d'extension de la première partie inclinée (110) ; et
dans lequel la première lamelle (100D) et la deuxième lamelle (100) sont formées par alternance dans une direction circonférentielle du bandage pneumatique.
